# EUROPEAN PATENT APPLICATION

(11) **EP 4 842 057 A1**
(43) Date of publication of application: **18.11.2026**
(21) Application number: 24922806.5
(22) Date of filing: 06.02.2024
(51) Int. Cl.: H04W 36/00

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN); LIN, Xue, Dongguan, Guangdong 523860 (CN)
(74) Representative: Mewburn Ellis LLP
(86) International application number: PCT/CN2024/076426
(87) International publication number: WO 2025/166563

(57) **Abstract**

Provided are a wireless communication method and a communication device. The method comprises: a terminal device receives first signaling of a first MN or a first SN, the first signaling being used for instructing the terminal device to perform LTM handover for a target cell, wherein the target cell is determined on the basis of a plurality of candidate cells, and the plurality of candidate cells belong to different SNs. In the present application, the terminal device may perform LTM handover for the target cell on the basis of the first signaling of the first MN or the first SN.

## Description

### TECHNICAL FIELD

The present application relates to the technical field of communications, and more specifically, to a wireless communication method and a communication device.

### BACKGROUND

In wireless communication systems, layer 1/layer 2 triggered mobility (LTM) switch can reduce switch latency and ensure service continuity. The LTM switch procedures are different in different scenarios. For example, for a secondary cell group (SCG) switch across secondary nodes (SNs) or an inter-SN SCG switch, it is a master node (MN) that initiates an SN switch request to each candidate SN. However, for an intra-SN SCG LTM switch, user equipment (UE) reports measurement results of candidate cells to the serving SCG. However, in the scenario of an SCG LTM switch across centralized units (CUs) or an inter-CU SCG LTM switch, candidate cells belong to different SNs, and how to execute the switch procedure has not yet been defined.

### SUMMARY

The present application provides a wireless communication method and a communication device. The various aspects of the present application are introduced below.

In a first aspect, a wireless communication method is provided, and the method includes: receiving, by a terminal device, first signaling from a first MN or a first SN, where the first signaling is used to indicate the terminal device to perform an LTM switch to a target cell, the target cell is determined based on multiple candidate cells, and the multiple candidate cells belong to different SNs.

In a second aspect, a wireless communication method is provided, and the method includes: transmitting, by a first device, first signaling to a terminal device, where the first signaling is used to indicate the terminal device to perform an LTM switch to a target cell, the target cell is determined based on multiple candidate cells, and the multiple candidate cells belong to different SNs.

In a third aspect, a communication device is provided, where the communication device is a terminal device, and the communication device includes: a receiving module, configured to receive first signaling from a first MN or a first SN, where the first signaling is used to indicate the terminal device to perform an LTM switch to a target cell, the target cell is determined based on multiple candidate cells, and the multiple candidate cells belong to different SNs.

In a fourth aspect, a communication device is provided, where the communication device is a first device, and the communication device includes: a transmitting module, configured to transmit first signaling to a terminal device, where the first signaling is used to indicate the terminal device to perform an LTM switch to a target cell, and the target cell is determined based on multiple candidate cells, and the multiple candidate cells belong to different SNs.

In a fifth aspect, a communication device is provided, including a memory and a processor. The memory is configured to store a program, and the processor is configured to invoke the program in the memory, to enable the communication device to perform the method as described in the first aspect.

In a sixth aspect, a communication device is provided, including a memory and a processor. The memory is configured to store a program, and the processor is configured to invoke the program in the memory to enable the communication device to perform the method as described in the second aspect.

In a seventh aspect, an apparatus is provided, including a processor. The processor is configured to invoke a program from a memory, to enable the apparatus to perform the method as described in the first aspect or the second aspect.

In an eighth aspect, a chip is provided, comprising a processor. The processor is configured to invoke a program from a memory, to enable a device equipped with the chip to perform the method as described in the first aspect or the second aspect.

In a ninth aspect, a computer-readable storage medium is provided, having a program stored thereon. The program enables a computer to perform the method as described in the first aspect or the second aspect.

In a tenth aspect, a computer program product is provided, including a program. The program enables a computer to perform the method as described in the first aspect or the second aspect.

In an eleventh aspect, a computer program is provided. The computer program enables a computer to perform the method as described in the first aspect or the second aspect.

In the present application, the terminal device can perform an LTM switch to a target cell based on first signaling from a first MN or a first SN.

### BRIEF DESCRIPTION OF THE DRAWINGS

FIG. 1 is a schematic structural diagram of a wireless communication system to which embodiments of the present application can be applied.
FIG. 2 is a schematic flowchart of an LTM switch.
FIG. 3 is a schematic flowchart of an inter-SN CPC procedure.
FIG. 4 is a schematic flowchart of a wireless communication method provided by an embodiment of the present application.
FIG. 5 is a schematic flowchart of a wireless communication method provided by another embodiment of the present application.
FIG. 6 is a schematic flowchart of a wireless communication method provided by another embodiment of the present application.
FIG. 7 is a schematic flowchart of a wireless communication method provided by another embodiment of the present application.
FIG. 8 is a schematic flowchart of a wireless communication method provided by Embodiment 1 of the present application.
FIG. 9 is a schematic flowchart of a wireless communication method provided by Embodiment 2 of the present application.
FIG. 10 is a schematic flowchart of a wireless communication method provided by Embodiment 3 of the present application.
FIG. 11 is a schematic flowchart of a wireless communication method provided by Embodiment 4 of the present application.
FIG. 12 is a schematic structural diagram of a communication device provided by an embodiment of the present application.
FIG. 13 is a schematic structural diagram of a communication device provided by another embodiment of the present application.
FIG. 14 is a schematic structural diagram of a communication apparatus provided by embodiments of the present application.

### DETAILED DESCRIPTION

The technical solutions in the present application will be described below in conjunction with the accompanying drawings.

### Communication system architecture

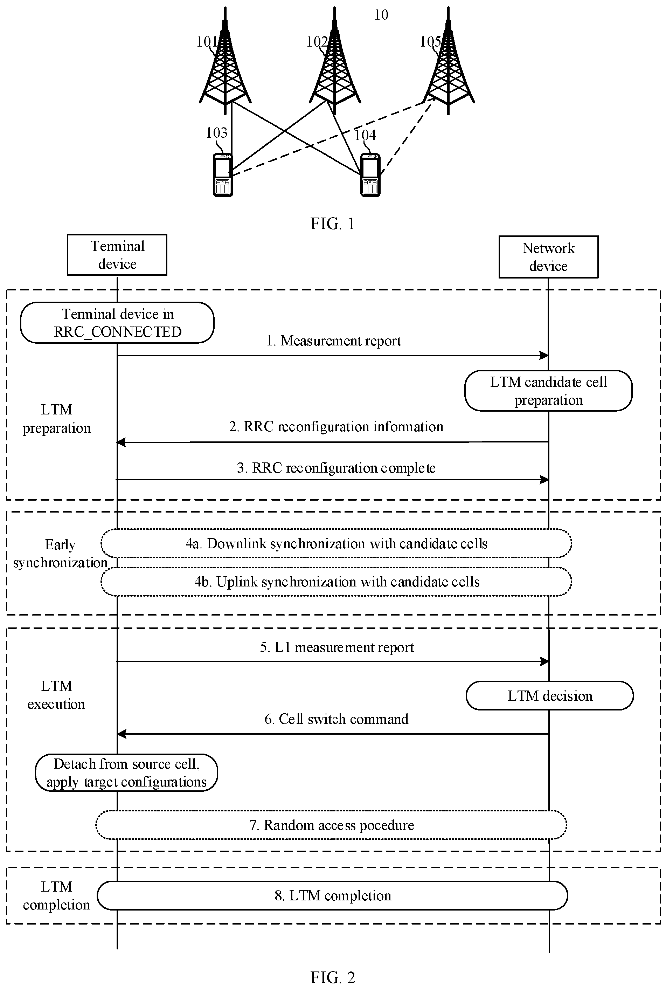

The communication system to which the embodiments of the present application can be applied is described below with reference to FIG. 1 as an example.

As illustrated in FIG. 1, a communication system 10 may include a base station 101, a base station 102, a base station 105, a terminal device 103, and a terminal device 104. The communication system 10 is dual-connectivity architecture. The base station 101 is a master base station (also referred to as a master node), and the base station 102 and the base station 105 are secondary base stations (also referred to as secondary nodes).

The base station in FIG. 1 may be any type of device with wireless transmission and reception functions, including but not limited to: an evolutional base station (evolutional Node B, eNodeB, eNB or e-NodeB) in long term evolution (LTE), a base station (gNodeB or gNB) or a transmission receiving point/transmission reception point (TRP) in new radio (NR), or subsequent evolutions of the 3rd generation partnership project (3GPP). The base station may be a macro base station, a micro base station, a pico base station, a small cell, a relay station, or a balloon station, or the like. Multiple base stations may support networks of the same technology mentioned above, and may also support networks of different technologies mentioned above. A base station may include one or more co-located or non-co-located TRPs. The base station may also be a radio controller, a CU, and/or a distributed unit (DU) in a cloud radio access network (CRAN) scenario. The base station may be stationary, and may also be mobile. For example, a helicopter or an unmanned aerial vehicle may be configured to serve as a mobile base station, and one or more cells may move according to the position of the mobile base station. In other examples, a helicopter or an unmanned aerial vehicle may be configured to serve as a device for communicating with another base station.

The terminal device in FIG. 1 is a device with wireless transmission and reception functions. The terminal device may be deployed on land, including indoors or outdoors, handheld, wearable, or in-vehicle; the terminal device may also be deployed on water (e.g., on ships); and the terminal device may also be deployed in the air (e.g., on airplanes, balloons, and satellites). The terminal device may be a mobile phone, a tablet computer (Pad), a computer with wireless transmission and reception functions, a virtual reality (VR) terminal device, an augmented reality (AR) terminal device, a terminal in industrial control, an in-vehicle terminal device, a terminal device in self-driving, a terminal device in assisted driving, a terminal device in remote medical, a terminal device in a smart grid, a terminal device in transportation safety, a terminal device in a smart city, a terminal device in a smart home, or the like. The embodiments of the present application do not limit the application scenarios. The terminal device may also sometimes be referred to as a terminal, a UE, an access terminal, an in-vehicle terminal, an industrial control terminal, a UE unit, a UE station, a mobile site, a mobile station, a remote station, a remote terminal, a mobile device, a UE terminal device, a wireless communication device, a machine terminal, a UE agent, or a UE apparatus, or the like. The terminal may be stationary, and may also be mobile.

As an example rather than limitation, in the embodiments of the present application, the terminal device may be a wearable device. The wearable device may also be referred to as a wearable smart device, which is a general term for wearable devices developed by using wearable technology to intelligently design for everyday wear, such as glasses, gloves, a watch, clothing, or shoes. The wearable device is a portable device that is worn directly on the body, or integrated into a user's clothing or accessories. The wearable device is not only a hardware device, but also implements powerful functions through software support as well as data interaction, or cloud interaction. Generalized wearable smart devices include full-featured, large-sized devices that may implement full or partial functionality without relying on smart phones, such as a smart watch or smart glasses, and devices that focus on a certain type of application functionality only and need to be used in conjunction with other devices (e.g., smart phones), such as various smart bracelets or smart jewelry for monitoring physical signs.

### LTM switch

To further reduce switch latency and ensure service continuity, a layer 1/layer 2 (L1/L2) triggered switch procedure, LTM, has been proposed in related art. The specific procedure of LTM may be as illustrated in FIG. 2, and the execution steps of LTM may include steps 1 to 8.

First phase: LTM preparation (steps 1 to 3).

In step 1, the UE reports a measurement result of layer 3 (L3) to the base station, and the base station determines to initiate the LTM procedure and triggers candidate cell preparation.

In step 2, the base station transmits a radio resource control (RRC) configuration message (i.e., an RRCReconfiguration message) including LTM candidate cell configuration to the UE. The number of candidate cells may be one or more.

In step 3, the UE stores the LTM candidate cell configuration and feeds back a reconfiguration complete message (RRCReconfigurationComplete message) to the network.

Second phase: early synchronization (steps 4a and 4b).

In steps 4a to 4b, before receiving the LTM cell switch command, the UE may perform downlink/uplink synchronization with the candidate cells in advance to reduce the interruption latency during the switch procedure.

Third phase: LTM execution (steps 5 to 7).

In step 5, the UE performs an L1 measurement on each candidate cell and reports measurement results of the L1 to the network.

In step 6, the base station determines the target cell based on L1 measurement results reported by the UE and indicates the UE to switch to the target cell via a medium access control (MAC) control element (CE).

In step 7, in a case where the UE does not currently have a valid time advance (TA) or transmission configuration indicator (TCI) state identification (ID) of the target cell, then after receiving the LTM switch indication, the UE initiates a random access procedure towards the target cell.

Fourth phase: LTM completion (step 8).

In step 8, the UE transmits indication information that the LTM is successfully completed to the target cell.

### Xn interaction in inter-SN continuous packet connection (CPC) procedure

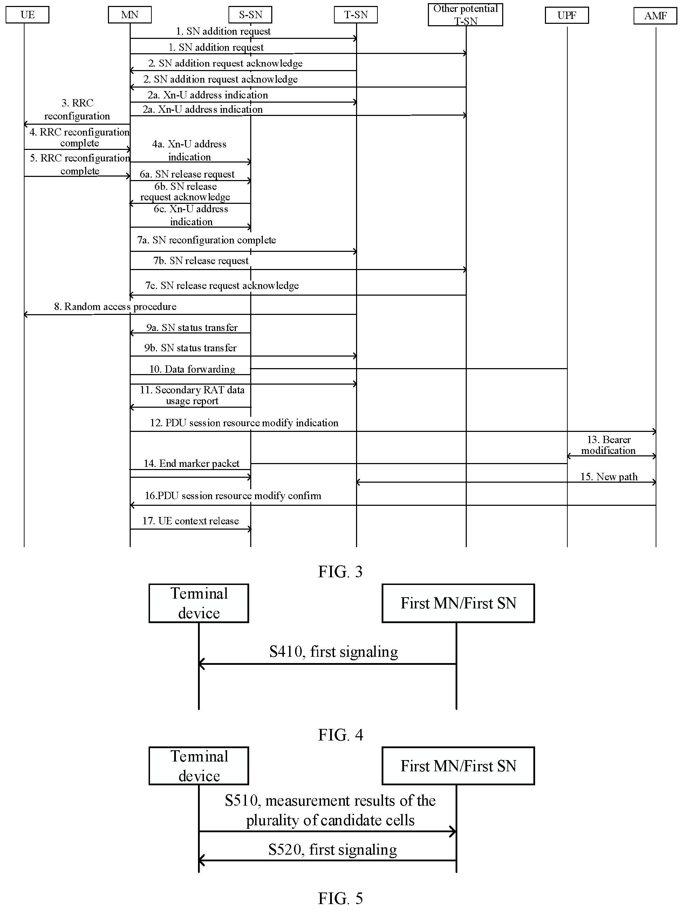

The signaling interaction procedure in an inter-SN CPC procedure may be as illustrated in FIG. 3. The UE has a network connection with a source/serving-SN (S-SN), and the target cell to the UE switches belongs to the target-SN (T-SN).

In step 1 or 2, the MN transmits an SN addition request to the candidate SNs, to request the candidate SNs to prepare, for the UE, candidate cell configuration for CPC. Meanwhile, the MN may further provide the candidate SNs with a list of recommended candidate cells, the maximum number of candidate cells, etc., via the SN addition request. The candidate SNs prepare the candidate cell configuration for the CPC procedure based on this request from the MN and feed back the candidate cell configuration to the MN via an SN addition request acknowledge message. In a case where data forwarding is required to be performed, the candidate SNs may also carry a data forwarding address in the SN addition request acknowledge message.

In step 2a, in a case where there is an SN-terminated master cell group (MCG) bearer configuration, the MN further needs to provide Xn-U downlink (DL) transport network layer (TNL) address information to each candidate SN via an Xn-U address indication message.

In step 3 or 4, the MN provides CPC configuration to the UE through the RRC reconfiguration procedure, and the CPC configuration includes candidate cell configuration and execution condition configuration associated with candidate cells.

In step 4a, after completing the CPC configuration, the MN may indicate the S-SN to perform early data forwarding.

In step 5, the UE evaluates the candidate cells based on execution conditions in the CPC configuration. When at least one candidate cell meets the execution conditions, the UE applies the target cell configuration and transmits an RRC reconfiguration complete message to the MN, where the RRC reconfiguration complete message includes the target cell ID to help the MN determine the target SN.

In steps 6a to 6c, the MN triggers an SN release procedure towards the source SN, indicating the source SN to stop data transmission to the UE. The MN initiates an Xn-U address indication procedure towards the source SN, providing the source SN with the Xn-U address of the target SN for data forwarding between the source SN and the target SN.

In steps 7a to 7c, the MN indicates the candidate SNs to release the CPC candidate cell configuration via an SN release request message.

In step 8, the UE initiates an uplink synchronization procedure towards a target primary secondary cell (PSCell).

In steps 9a to 16, Xn signaling interactions related to user plane data transmission are not described in detail here.

In step 17, the MN triggers the source SN to release the UE context.

The LTM switch procedure is different in different scenarios. For example, for an inter-SN SCG switch, it is the MN that initiates an SN switch request to each candidate SN. For an R18 intra-SN SCG LTM switch, the UE needs to perform measurements and reporting on candidate cells based on the candidate cell configuration information, and the measurement reports are transmitted to the serving SCG. However, in an inter-CU SCG LTM switch scenario, the candidate cells belong to different SNs, and how to execute the switch procedure has not yet been defined.

Based on this, the method of the embodiments of the present application is described in detail below. In the present application, the terminal device can perform an LTM switch to a target cell based on first signaling from a first MN or a first SN.

As illustrated in FIG. 4, the embodiment of the present application provides a wireless communication method. The wireless communication method may be performed by a first device, a second device, and a terminal device. The first device or the second device may be the above master node or secondary node. There is a network connection between the first device or the second device and the terminal device. The terminal device may be any of the terminal devices described above. For ease of understanding, the first MN (i.e., source MN) is used to describe the master node, and the first SN (i.e., source SN/serving SN) is used to describe the secondary node.

The method illustrated in FIG. 4 may include step S410. In step S410, the terminal device receives first signaling from the first MN or the first SN, where the first signaling may be used to indicate the terminal device to perform an LTM switch to a target cell. The target cell may be determined based on multiple candidate cells, and the multiple candidate cells belong to different SNs. That is, the first signaling may be used to indicate the terminal device to perform an inter-CU SCG LTM switch.

Exemplarily, the first signaling may be an LTM cell switch command. The first signaling may be carried in a MAC CE. After receiving the MAC CE, the UE may indicate the content of the MAC CE to an RRC layer of the UE, and the RRC layer may indicate the corresponding MAC entity (MCG/SCG) to perform the LTM procedure based on the content of the first signaling.

The first signaling may include at least one of: an identity of the target cell; TCI state information (state info) of the target cell; TA information of the target cell; a random access channel (RACH) resource configuration for the terminal device; an uplink (UL) resource configuration for the terminal device; or a UL/supplementary uplink (SUL) carrier configuration for the terminal device. The identity of the target cell may be a target cell index, and the uplink resource configuration for the terminal device may be a UL grant. The first signaling helps the terminal device to identify the target cell for the LTM switch and the associated uplink resources.

The first signaling may also include first switch indication information, the first switch indication information may be used to indicate whether the LTM switch is an MCG LTM switch or an SCG LTM switch. For example, when the first signaling is indicated by the first MN to the terminal device, the terminal device may determine whether the first signaling is used for performing an MCG LTM switch or an SCG LTM switch based on the first indication information in the first signaling. Exemplarily, the first switch indication information may be an SCG/MCG LTM indication. The first switch indication information helps the terminal device to identify whether to perform an MCG LTM switch or an SCG LTM switch.

As an example, the first switch indication information may be determined based on a format of the MAC CE for the first signaling. For example, the first signaling for MCG LTM or SCG LTM may be carried in MAC CEs of different formats, respectively.

As another example, the first switch indication information may also be determined based on a logical channel identification (LCID) field of the MAC CE for the first signaling. For example, the first signaling for MCG LTM and SCG LTM may be carried in MAC CEs of the same format but distinguished by different LCID fields.

As another example, the first switch indication information may also be determined based on a bit field of the MAC CE for the first signaling. For example, the first signaling for MCG LTM and SCG LTM may be carried in a MAC CE of the same format, but one bit of the MAC CE is used to indicate whether the LTM cell switch command is used for SCG LTM or MCG LTM.

As another example, the first switch indication information may also be determined based on the target cell index in the first signaling. For example, different ranges of the target cell index may represent whether the candidate cell is used for SCG LTM or MCG LTM.

The RACH resource configuration for the terminal device in the first signaling may include contention free random access (CFRA) resource configuration selected for the target cell. The CFRA resource configuration may be determined based on an indication from the target SN or the source SN. For example, the first MN or the first SN may, before transmitting the first signaling to the terminal device, receive, from the target SN or the source SN, an indication of the CFRA resource selected by the target SN or the source SN for the target cell.

In some implementations, as illustrated in FIG. 5, before the terminal device receives the first signaling, the wireless communication method of the embodiment of the present application may further include step S510. In step S510, the terminal device reports measurement results of the multiple candidate cells to the first MN or the first SN. The measurement results may be used by the first MN or the first SN to determine the target cell and/or the content of the first signaling. The manner in which the terminal device reports the measurement results may be periodic, semi-periodic, or based on a conditional trigger, and the reporting manner of the measurement results may be configured by the network. The measurement results of the candidate cells reported by the terminal device helps the first MN or the first SN to determine the target cell and/or the content of the first signaling.

Furthermore, in a case where the measurement results are reported to the first MN, reporting resources for the measurement results may be configured by the first MN. Alternatively, in a case where the measurement results are reported to the first SN, reporting resources for the measurement results may be configured by the first SN. The configuration information for these reporting resources may be included in the serving cell configuration (serving cell config) / serving cell group configuration (serving cell group config) of the first MN or the first SN, or included in the LTM configuration. That is, the node that receives the measurement results may configure the resources for the terminal device to report the measurement results, which helps the terminal device to identify how to report the measurement results.

In some implementations, in a case where the measurement results are reported to the first MN, the target cell may be determined by the first MN. Alternatively, in a case where the measurement results are reported to the first SN, the target cell may be determined by the first SN. That is, the node that receives the measurement results may directly determine the target cell based on the measurement results, which helps to reduce interactions between nodes and improve operational efficiency.

In other implementations, the node that receives the measurement results may not determine the target cell but instead forwards the measurement results to another node, and the another node determines the target cell. For example, in a case where the measurement results are reported to the first MN, the first MN may forward the measurement results to the first SN, and the first SN determines the target cell. For another example, in a case where the measurement results are reported to the first SN, the first SN may forward the measurement results to the first MN, and the first MN determines the target cell.

In some implementations, the node that determines the target cell may transmit indication information of the target cell to another node (i.e., the second device). For example, when the target cell is determined by the first MN, the first MN may indicate the target cell to the first SN. For another example, when the target cell is determined by the first SN, the first SN may indicate the target cell to the first MN. Alternatively, the indication information of the target cell may be reported by the terminal device to another node via an RRC reconfiguration complete message.

In some implementations, the node that determines the target cell may be the node that transmits the first signaling to the terminal device (i.e., the node that triggers the LTM switch, also referred to as the first device). For example, when it is the first MN that transmits the first signaling to the terminal device, the first MN may determine the target cell. For another example, when it is the first SN that transmits the first signaling to the terminal device, the first SN determines the target cell.

In other implementations, the node that determines the target cell may not be the node that transmits the first signaling to the terminal device (i.e., the node that triggers the LTM switch, also referred to as the first device). For example, when it is the first MN that transmits the first signaling to the terminal device, the target cell is determined by the first SN. For another example, when it is the first SN that transmits the first signaling to the terminal device, the target cell is determined by the first MN.

Furthermore, the node that transmits the first signaling to the terminal device may receive first indication information from another node (also referred to as the second device), where the first indication information may be used to indicate the target cell. For example, when it is the first MN that transmits the first signaling to the terminal device, while the target cell is determined by the first SN, the first MN may receive indication information of the target cell transmitted by the first SN. For another example, when it is the first SN that transmits the first signaling to the terminal device, while the target cell is determined by the first MN, the first SN may receive indication information of the target cell transmitted by the first MN.

In some implementations, the node that transmits the first signaling (i.e., the node that triggers the LTM switch, also referred to as the first device) may indicate the TCI state information of the target cell to the target SN. The target cell here may be determined by the node that transmits the first signaling or indicated by another node to the node that transmits the first signaling. Furthermore, the node that transmits the first signaling may directly indicate the TCI state information of the target cell to the target SN, or the TCI state information of the target cell may be forwarded to the target SN by another node. For example, in a case where the node that transmits the first signaling is the first MN and the target cell is determined by the first MN, the first MN may directly indicate the TCI state information of the target cell to the target SN. For another example, in a case where the node that transmits the first signaling is the first SN and the target cell is determined by the first SN, the first SN may indicate the TCI state information of the target cell to the first MN, and then the first MN forwards the TCI state information of the target cell to the target SN. Alternatively, the first SN may directly indicate the TCI state information of the target cell to the target SN.

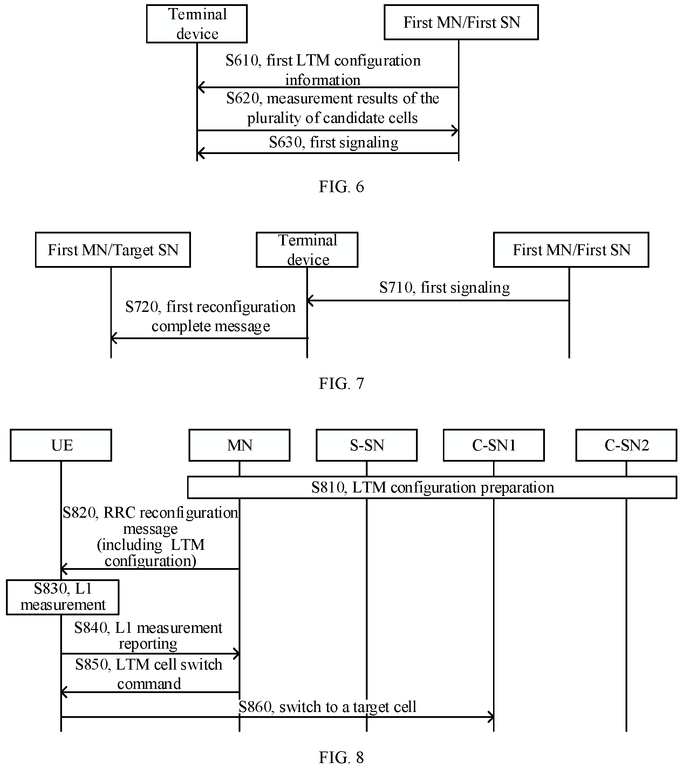

In some implementations, as illustrated in FIG. 6, before the terminal device reports the measurement results of the multiple candidate cells to the first MN or the first SN, the wireless communication method of the embodiment of the present application may further include step S610. In step S610, the terminal device receives first LTM configuration information from the first MN or the first SN. The first LTM configuration information may be used by the terminal device to perform measurements on the multiple candidate cells, and the first LTM configuration information may be determined based on configuration preparation of the first MN and/or configuration preparation of the first SN. Exemplarily, the first LTM configuration information may be LTM configuration information, the first LTM configuration information may be carried in an RRC configuration. For example, the first MN and/or the first SN may perform LTM configuration preparation and determine the LTM configuration information. The first MN may transmit an RRC configuration message carrying the LTM configuration information to the terminal device. Furthermore, the first MN may also transmit the first LTM configuration information to the source SN, which helps the source SN to cooperate with the LTM switch.

The first LTM configuration information may include at least one of: configuration information for the multiple candidate cells; configuration information for the measurements; reporting configuration information for the measurements; early synchronization configuration information for the multiple candidate cells; or TCI state configuration information for the multiple candidate cells. The first LTM configuration information helps the terminal device to identify the multiple candidate cells to be measured and the measurement related configuration.

Based on the first signaling and the first LTM configuration information, the terminal device may perform the LTM execution procedure towards the target cell. The LTM execution may include RACH-based LTM and RACH-less LTM. The UE may determine, based on whether there is currently an available TA, whether to perform RACH-based LTM or RACH-less LTM. The TA may be indicated by the network or calculated by the UE.

In some implementations, as illustrated in FIG. 7, the wireless communication method of the present application embodiment may further include step S720. In step S720, in a case where the terminal device completes the LTM switch, the terminal device transmits a first reconfiguration complete message to a target SN or the first MN. The first reconfiguration complete message may be an RRCReconfigurationComplete message or any uplink message. The first reconfiguration complete message may be transmitted by the terminal device directly to the target SN or forwarded via the MN. Furthermore, the first reconfiguration complete message may not include the target cell ID (i.e., the candidate cell ID corresponding to the target cell).

In some implementations, when the terminal device is performing the LTM switch, the node that transmits the first signaling (i.e., the node that triggers the LTM switch, also referred to as the first device) may transmit second indication information to a target SN. The second indication information may be used to indicate that the terminal device is performing the LTM switch to the target cell. For example, when the node that transmits the first signaling is the first MN, the first MN may transmit the second indication information to the target SN. The second indication information helps the target SN to cooperate with the terminal device to perform the LTM switch.

Based on the above description, it may be understood that in an inter-CU SCG LTM switch procedure, the node that transmits the first signaling (i.e., the node that triggers the LTM switch), the node that determines the target cell (or the target cell selection node), and the node to which the terminal device reports measurement results (i.e., the node that receives the measurement results, or referred to as the layer 1 report to (L1 report to) node) may be the first MN or the first SN, respectively. As illustrated in Table 1, there may be 8 options for the various nodes in the switch procedure.

**Table 1: Node table for inter-CU SCG LTM switch procedure**

| Option | 1 | 2 | 3 | 4 | 5 | 6 | 7 | 8 |
|---|---|---|---|---|---|---|---|---|
| Trigger LTM | MN | SN | MN | SN | MN | SN | SN | MN |
| Target cell selection | MN | SN | SN | MN | MN | SN | MN | SN |
| L1 report to | MN | SN | SN | MN | SN | MN | SN | MN |

The wireless communication method of the embodiments of the present application will be described below with reference to Embodiments 1 to 4, taking options 1 to 4 in Table 1 as examples. It should be noted that in Embodiments 1 to 4, the UE has a network connection with the MN (i.e., the first MN) and the S-SN (i.e., the first SN). The candidate cells for LTM switch performed by the UE belong to candidate-SN (C-SN) 1 and C-SN2, respectively, and the target cell belongs to the C-SN1.

### Embodiment 1

Referring to FIG. 8, the inter-CU SCG LTM switch procedure illustrated in Embodiment 1 may include steps S810 to S880. The node that triggers LTM, the node for target cell selection, and the L1 report to node are all the MN.

In step S810, the MN and/or the SN perform LTM configuration preparation. The LTM configuration includes at least one of: candidate cell configuration, measurement configuration, measurement reporting configuration, early synchronization configuration, or TCI state configuration.

In step S820, the MN transmits an RRC reconfiguration message carrying the LTM configuration to the UE.

In step S830, the UE performs measurements (also referred to as L1 measurements) based on the LTM configuration. The measurements may be used to monitor candidate cells.

In step S840, the UE performs measurement reporting (also referred to as L1 measurement reporting) based on the LTM configuration. The measurement reporting manner may be periodic, semi-periodic, or based on a conditional trigger, and the reporting manner is configured by the network. The UE reports the measurement results to the MN, which means the resources associated with the measurement reporting configuration are configured by the MN. This measurement reporting configuration may be included in the serving cell config/cell group config of the MN, or included in the LTM configuration. The MN determines the target cell and the content of the LTM cell switch command based on the measurement report and indicates the target cell and the content of the LTM cell switch command to the UE.

The MN may indicate the selected TCI state information to the target SN. After receiving this indication, the CU of the target SN transmits the TCI state ID and the target cell ID to the DU corresponding to the target cell (via F1 signaling) (not illustrated in the figure).

In step S850, the UE receives an LTM cell switch command transmitted by the MN. The LTM cell switch command includes at least one of: a target cell index, TCI state info, a TA, an RACH resource, or UL grant. The UE may determine whether the LTM cell switch command is used for performing an MCG LTM or an SCG LTM based on an SCG/MCG LTM indication. The indication may be distinguished by different MAC CEs. For example, the MCG LTM cell switch command and the SCG LTM cell switch command are indicated by different MAC CEs; or the MCG LTM cell switch command and the SCG LTM cell switch command are indicated by the same MAC CE format but distinguished by different LCIDs; or the MCG LTM cell switch command and the SCG LTM cell switch command are indicated by the same MAC CE format, where one bit included in the MAC CE is used to indicate whether the LTM cell switch command is used for SCG LTM or MCG LTM. Whether the LTM cell switch command is used for SCG LTM or MCG LTM may also be distinguished implicitly, for example, by different cell index ranges representing whether the candidate cell is used for SCG LTM or MCG LTM.

The MN may receive, from the target SN, an indication of the CFRA resource selected by the target SN for the target cell, and the MN may indicate the CFRA resource to the UE in the LTM cell switch command (not illustrated in the figure).

After receiving the MAC CE, the UE may indicate the content of the MAC CE to the RRC layer. The RRC layer then indicates the corresponding MAC entity (MCG/SCG) to execute the LTM procedure based on the content of the LTM cell switch command (not illustrated in the figure).

In step S860, the UE switches to the target cell. The UE may perform LTM execution towards the target cell based on the LTM cell switch command and the LTM config. The LTM execution includes RACH-based LTM and RACH-less LTM. The UE may determine, based on whether there is currently an available TA, whether to perform RACH-based LTM or RACH-less LTM. The TA may be explicitly indicated by the network or calculated by the UE.

In step S870, the MN may also transmit indication information to the target SN. The indication information may be used to indicate that the UE is performing LTM execution towards the target cell (not illustrated in the figure).

In step S880, after the switch is completed, the UE may transmit a reconfiguration complete message or any uplink message to the target SN. The reconfiguration complete message may be transmitted directly to the target SN or forwarded via the MN. The RRCReconfigurationComplete message may not include the candidate cell ID of the target cell.

It is worth noting that the order of step S870 and step S880 may be reversed, which is not limited in the present application.

### Embodiment 2

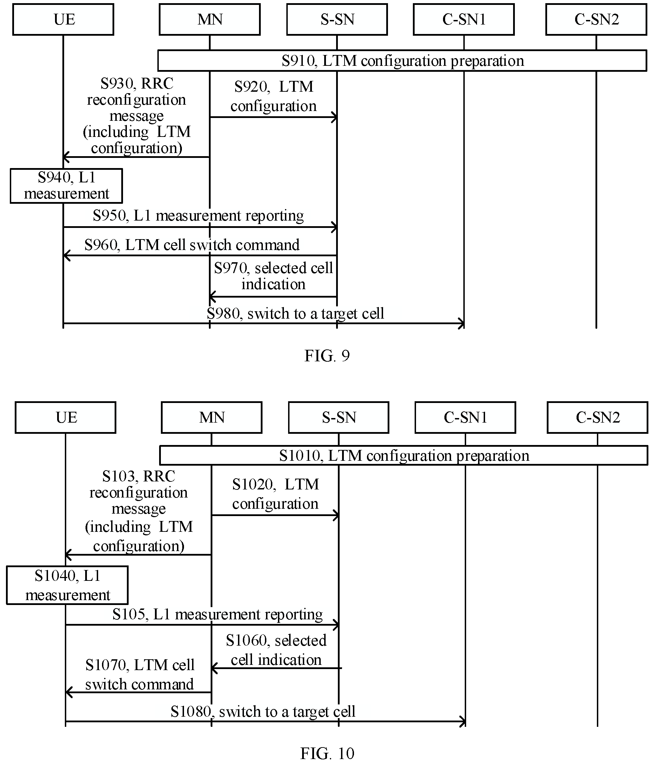

Referring to FIG. 9, the inter-CU SCG LTM switch procedure illustrated in Embodiment 2 may include steps S910 to S980. The node that triggers LTM, the node for target cell selection, and the L1 report to node are all the SN.

In step S910, the MN and/or the SN perform LTM configuration preparation. The LTM configuration may include at least one of: candidate cell configuration, measurement configuration, measurement reporting configuration, early synchronization configuration, or TCI state configuration.

In step S920, the MN forwards the LTM configuration to the S-SN.

In step S930, the MN transmits an RRC reconfiguration message carrying the LTM configuration to the UE (the order of step S920 and step S930 is not limited).

In step S940, the UE performs measurements (also referred to as L1 measurements) based on the LTM configuration. The measurements are used to monitor candidate cells.

In step S950, the UE performs measurement reporting based on the LTM configuration. The measurement reporting manner may be periodic, semi-periodic, or based on a conditional trigger, and the reporting manner is configured by the network. The UE reports the measurement results to the S-SN, which means the resources associated with the measurement reporting configuration are configured by the S-SN. This measurement reporting configuration may be included in serving cell config/cell group config of the S-SN, or included in the LTM configuration.

In step S960, the UE receives the LTM cell switch command transmitted by the S-SN. The LTM cell switch command includes at least one of: a target cell index, TCI state info, a TA, an RACH resource, or UL grant.

In step S970, the S-SN transmits a selected cell indication to the MN. Optionally, the selected cell indication may also be used for the UE, through an RRC reconfiguration complete, to report information about the accessed target cell.

The S-SN may interact with the T-SN regarding target cell indication information. The S-SN may forward the target cell indication information to the T-SN via the MN (i.e., S-SN->MN->T-SN), or the S-SN may transmit the target cell indication information directly to the T-SN (i.e., S-SN->T-SN). The target cell indication information may also include TCI state information. After receiving this indication, the CU of the target SN may transmit the TCI state ID and the target cell ID to the DU corresponding to the target cell (via F1 signaling) (not illustrated in the figure).

The S-SN may receive, from the target SN, an indication of the CFRA resource selected by the target SN for the target cell and the S-SN may indicate the CFRA resource to the UE in the LTM cell switch command (not illustrated in the figure).

In step S980, the UE switches to the target cell. The UE may perform LTM execution towards the target cell based on the LTM cell switch command and the LTM config. The LTM execution includes RACH-based LTM and RACH-less LTM. The UE may determine, based on whether there is currently an available TA, whether to perform RACH-based LTM or RACH-less LTM. The TA may be explicitly indicated by the network or calculated by the UE.

After the switch is completed, the UE may transmit a reconfiguration complete message or any uplink message to the target SN. The reconfiguration complete message may be transmitted to the target SN directly or forwarded to the target SN via the MN (not illustrated in the figure).

### Embodiment 3

Referring to FIG. 10, the inter-CU SCG LTM switch procedure illustrated in Embodiment 3 may include steps S1010 to S1080. The node that triggers LTM is the MN, the node for target cell selection is the SN, and the L1 report to node is the SN.

In step S1010, the MN and/or the SN perform LTM configuration preparation. The LTM configuration may include at least one of: candidate cell configuration, measurement configuration, measurement reporting configuration, early synchronization configuration, or TCI state configuration.

In step S1020, the MN forwards the LTM configuration to the S-SN.

In step S1030, the MN transmits an RRC reconfiguration message carrying the LTM configuration to the UE (the order of step S1020 and step S1030 is not limited).

In step S1040, the UE performs measurements (also referred to as L1 measurements) based on the LTM configuration. The measurements are used to monitor candidate cells.

In step S1050, the UE performs measurement reporting based on the LTM configuration. The measurement reporting manner may be periodic, semi-periodic, or based on a conditional trigger, and the reporting manner is configured by the network. The UE reports the measurement results to the S-SN, which means the resources associated with the measurement reporting configuration are configured by the S-SN. This measurement reporting configuration may be included in the serving cell config/cell group config of the S-SN, or included in the LTM configuration.

In step S1060, the S-SN determines the target cell based on the measurement report from the UE and indicates the target cell to the MN.

The S-SN may interact with the T-SN regarding target cell indication information. The S-SN may forward the target cell indication information to the T-SN via the MN (i.e., S-SN->MN->T-SN), or the S-SN may transmit the target cell indication information directly to the T-SN (i.e., S-SN->T-SN). The target cell indication information may also include TCI state information. After receiving this indication, the CU of the target SN may transmit the TCI state ID and the target cell ID to the DU corresponding to the target cell (via F1 signaling) (not illustrated in the figure).

The S-SN may receive, from the target SN, an indication of CFRA resource selected by the target SN for the target cell and the S-SN may indicate the CFRA resource to the UE in the LTM cell switch command (not illustrated in the figure).

In step S1070, the UE receives the LTM cell switch command transmitted by the MN. The LTM cell switch command can include at least one of: a target cell index, TCI state info, a TA, an RACH resource, or UL grant. The UE may determine whether the LTM cell switch command is used for performing an MCG LTM or an SCG LTM based on an SCG/MCG LTM indication. The indication may be distinguished by different MAC CEs. For example, the MCG LTM cell switch command and the SCG LTM cell switch command are indicated by different MAC CEs; or the MCG LTM cell switch command and the SCG LTM cell switch command are indicated by the same MAC CE format but distinguished by different LCIDs; or the MCG LTM cell switch command and the SCG LTM cell switch command are indicated by the same MAC CE format, where one bit included in the MAC CE is used to indicate whether the LTM cell switch command is used for SCG LTM or MCG LTM. Whether the LTM cell switch command is used for SCG LTM or MCG LTM may also be distinguished implicitly, for example, by different cell index ranges representing whether the candidate cell is used for SCG LTM or MCG LTM.

In step S1080, the UE switches to the target cell. The UE may perform LTM execution towards the target cell based on the LTM cell switch command and the LTM config. The LTM execution includes RACH-based LTM and RACH-less LTM. The UE may determine, based on whether there is currently an available TA, whether to perform RACH-based LTM or RACH-less LTM. The TA may be explicitly indicated by the network or calculated by the UE.

The UE may transmit a reconfiguration complete message or any uplink message to the target SN. The reconfiguration complete message may be transmitted directly to the target SN or forwarded via the MN (not illustrated in the figure).

### Embodiment 4

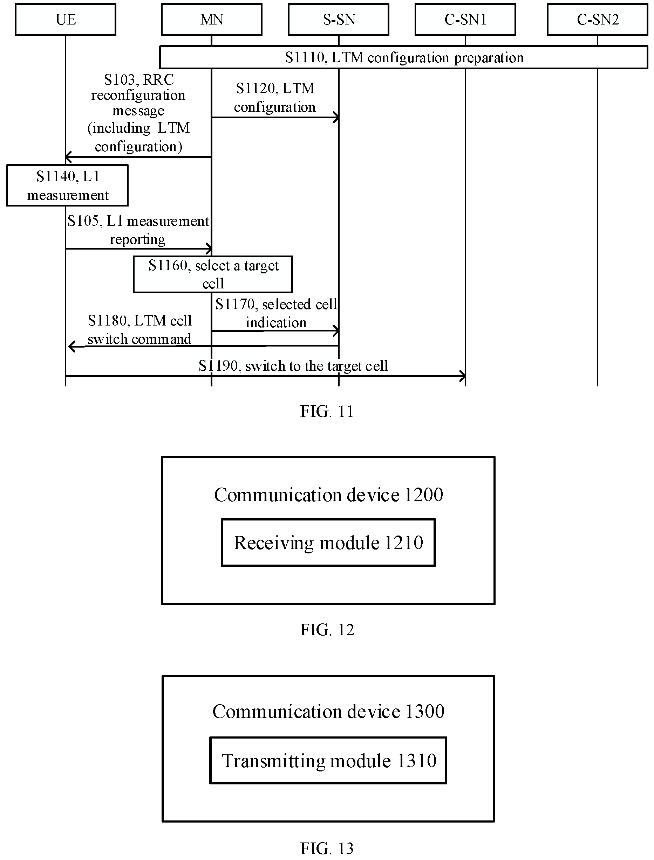

Referring to FIG. 11, the inter-CU SCG LTM switch procedure illustrated in Embodiment 4 may include steps S1110 to S1190. The node that triggers LTM is the SN, the node for target cell selection is the MN, and the L1 report to node is the MN.

In step S1110, the MN and/or the SN perform LTM configuration preparation. The LTM configuration includes at least one of: candidate cell configuration, measurement configuration, measurement reporting configuration, early synchronization configuration, or TCI state configuration.

In step S1120, the MN forwards the LTM configuration to the S-SN.

In step S1130, the MN transmits an RRC reconfiguration message carrying the LTM configuration to the UE (the order of step S1120 and step S1130 is not limited).

In step S1140, the UE performs measurements (also referred to as L1 measurements) based on the LTM configuration. The measurements are used to monitor candidate cells.

In step S1150, the UE performs measurement reporting based on the LTM configuration. The measurement reporting manner may be periodic, semi-periodic, or based on a conditional trigger, and the reporting manner is configured by the network. The UE reports the measurement results to the MN, which means the resources associated with the measurement reporting configuration are configured by the MN. This measurement reporting configuration may be included in the serving cell config/cell group config of the serving MN or included in the LTM configuration.

In step S1160, the MN determines the target cell based on the measurement report from the UE.

The MN or the S-SN may indicate the selected TCI state information to the target SN. After receiving this indication, the CU of the target SN transmits the TCI state ID and the target cell ID to the DU corresponding to the target cell (via F1 signaling) (not illustrated in the figure).

The SN receives, from the target SN, an indication of the CFRA resource selected by the target SN for the target cell, and the SN indicates the CFRA resource to the UE in the LTM cell switch command.

In step S1170, the MN transmits a selected cell indication to the S-SN.

In step S1180, the UE receives the LTM cell switch command transmitted by the S-SN. The LTM cell switch command includes at least one of: a target cell index, TCI state info, a TA, an RACH resource, or UL grant.

In step S1190, the UE switches to the target cell. The UE may perform LTM execution towards the target cell based on the LTM cell switch command and the LTM config. The LTM execution includes RACH-based LTM and RACH-less LTM. The UE may determine, based on whether there is currently an available TA, whether to perform RACH-based LTM or RACH-less LTM. The TA may be explicitly indicated by the network or calculated by the UE.

The UE may transmit a reconfiguration complete message or any uplink message to the target SN. The reconfiguration complete message may be transmitted directly to the target SN or forwarded to the target SN via the MN (not illustrated in the figure).

In the wireless communication methods of Embodiments 1 to 4, the node for target cell selection and the L1 report to node are the same. That is, the node that receives the measurement results determines the target cell, which can reduce interaction between nodes and help improve the efficiency of the LTM switch procedure.

The embodiments of the present application have been described in detail above with reference to FIGS. 1 to 11. Hereinafter, the apparatus embodiments of the present application will be described in detail with reference to FIGS. 12 to 14. It should be understood that the descriptions of the method embodiments and the apparatus embodiments correspond to each other. Therefore, for parts not described in detail, please refer to the above method embodiments.

FIG. 12 is a schematic structural diagram of a communication device according to an embodiment of the present application. The communication device 1200 illustrated in FIG. 12 may be a terminal device. The communication device 1200 may include a receiving module 1210. The receiving module 1210 may be configured to receive first signaling from a first MN or a first SN, where the first signaling may be used to indicate the terminal device to perform an LTM switch to a target cell. The target cell may be determined based on multiple candidate cells, and the multiple candidate cells may belong to different SNs.

In some implementations, the first signaling may include at least one of: an identity of the target cell; TCI state information of the target cell; TA information of the target cell; a RACH resource configuration for the terminal device; an uplink resource configuration for the terminal device; or a UL/SUL carrier configuration for the terminal device.

In some implementations, the first signaling may also include first switch indication information, and the first switch indication information may be used to indicate whether the LTM switch is an MCG LTM switch or an SCG LTM switch.

In some implementations, the RACH resource configuration for the terminal device may include a CFRA resource configuration selected for the target cell. The CFRA resource configuration may be determined based on an indication from a target SN or a source SN.

In some implementations, the communication device may further include a first transmitting module 1220. The first transmitting module 1220 may be configured to: before the receiving module receives the first signaling, report measurement results of the multiple candidate cells to the first MN or the first SN. The measurement results may be used by the first MN or the first SN to determine the target cell and/or the content of the first signaling.

In some implementations, in a case where the measurement results are reported to the first MN, reporting resources for the measurement results are configured by the first MN. In a case where the measurement results are reported to the first SN, reporting resources for the measurement results are configured by the first SN.

In some implementations, in a case where the measurement results are reported to the first MN, the target cell may be determined by the first MN. In a case where the measurement results are reported to the first SN, the target cell may be determined by the first SN.

In some implementations, before the terminal device reports the measurement results of the multiple candidate cells to the first MN or the first SN, the receiving module 1210 may further be configured to receive first LTM configuration information from the first MN or the first SN. The first LTM configuration information may be used by the terminal device to perform measurements on the multiple candidate cells, and the first LTM configuration information may be determined based on configuration preparation of the first MN and/or configuration preparation of the first SN.

In some implementations, the first LTM configuration information may include at least one of: configuration information for the multiple candidate cells; configuration information for the measurements; reporting configuration information for the measurements; early synchronization configuration information for the multiple candidate cells; or TCI state configuration information for the multiple candidate cells.

In some implementations, the communication device may further include a second transmitting module 1230. The second transmitting module 1230 may be configured to: in a case where the terminal device completes the LTM switch, transmit a first reconfiguration complete message to the target SN or the first MN.

In some implementations, the first reconfiguration complete message may not include a target cell ID.

FIG. 13 is a schematic structural diagram of a communication device according to an embodiment of the present application. The communication device 1300 illustrated in FIG. 13 may be a first device. The communication device 1300 may include a transmitting module 1310. The transmitting module 1310 may be configured to transmit first signaling to a terminal device, where the first signaling may be used to indicate the terminal device to perform an LTM switch to a target cell. The target cell may be determined based on multiple candidate cells, and the multiple candidate cells belong to different SNs.

In some implementations, the first signaling may include at least one of: an identity of the target cell; TCI state information of the target cell; TA information of the target cell; a RACH resource configuration for the terminal device; an uplink resource configuration for the terminal device; or a UL/SUL carrier configuration for the terminal device.

In some implementations, the first signaling may further include first switch indication information, and the first switch indication information may be used to indicate whether the LTM switch is an MCG LTM switch or an SCG LTM switch.

In some implementations, the RACH resource configuration for the terminal device may include a CFRA resource configuration selected for the target cell. The CFRA resource configuration may be determined based on an indication from a target SN or a source SN.

In some implementations, the target cell may be determined based on the measurement results of the multiple candidate cells from the terminal device.

In some implementations, the target cell may be determined by the first device.

In some implementations, the communication device may further include a first receiving module 1320. The first receiving module 1320 may be configured to: before the transmitting module 1310 transmits the first signaling to the terminal device, receive the measurement results of the multiple candidate cells reported by the terminal device.

In some implementations, reporting resources for the measurement results may be configured by the first device.

In some implementations, the transmitting module 1310 may further be configured to transmit indication information of the target cell to a second device.

In some implementations, the target cell may be determined by the second device.

In some implementations, the communication device may further include a second receiving module 1330. The second receiving module 1330 may be configured to: before the transmitting module transmits the first signaling to the terminal device, receive first indication information from the second device, where the first indication information is used to indicate the target cell.

In some implementations, the transmitting module 1310 may further be configured to indicate TCI state information of the target cell to the target SN.

In some implementations, the transmitting module 1310 may further be configured to: before transmitting the first signaling to the terminal device, transmit first LTM configuration information to the terminal device. The first LTM configuration information is used by the terminal device to perform measurements on the multiple candidate cells, and the first LTM configuration information is determined based on configuration preparation of the first device.

In some implementations, the first LTM configuration information may include at least one: configuration information for the multiple candidate cells; configuration information for the measurements; reporting configuration information for the measurement; early synchronization configuration information for the multiple candidate cells; or TCI state configuration information for the multiple candidate cells.

In some implementations, the first device may be a first SN or a first MN.

In some implementations, the transmitting module 1310 may further be configured to transmit second indication information to the target SN, where the second indication information is used to indicate that the terminal device is performing the LTM switch to the target cell.

In some implementations, the first device may be a first MN.

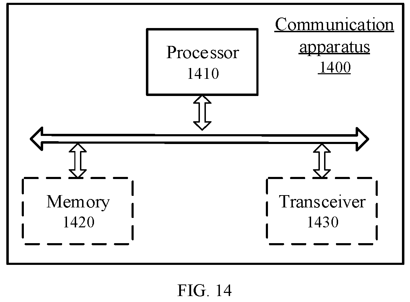

FIG. 14 is a schematic structural diagram of a communication apparatus according to an embodiment of the present application. A dashed line in FIG. 14 indicates that the unit or module is optional. This apparatus 1400 may be configured to implement the methods described in the foregoing method embodiments. This apparatus 1400 may be a chip, a terminal device, or a network device.

This apparatus 1400 may include one or more processors 1410. The processor 1410 may support the apparatus 1400 to implement the methods described in the above method embodiments. The processor 1410 may be a general-purpose processor or a special-purpose processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic device, a discrete gate or transistor logic device, a discrete hardware component, or the like. The general-purpose processor may be a microprocessor, or the processor may be any conventional processor, etc.

The apparatus 1400 may further include one or more memories 1420. The memory 1420 stores a program thereon, and the program may be executed by the processor 1410, to enable the processor 1410 to perform the methods described in the above method embodiments. The memory 1420 may be independent of the processor 1410 or integrated with the processor 1410.

The apparatus 1400 may further include a transceiver 1430. The processor 1410 may communicate with other devices or chips via the transceiver 1430. For example, the processor 1410 may transmit and receive data with other devices or chips via the transceiver 1430.

The embodiments of the present application further provide a computer-readable storage medium configured to store a program. The computer-readable storage medium may be applied to the communication device provided in the embodiments of the present application, and the program enables a computer to perform the methods in the various embodiments of the present application.

The embodiments of the present application further provide a computer program product. The computer program product includes a program. The computer program product may be applied to the communication device provided in the embodiments of the present application, and the program enables a computer to perform the methods in the various embodiments of the present application.

The embodiments of the present application further provide a computer program. The computer program may be applied to the communication device provided in the embodiments of the present application, and the computer program enables a computer to perform the methods in the various embodiments of the present application.

It should be understood that all or part of the functions of the communication device in the present application may also be implemented by software functions executed on hardware, or by virtualized functions instantiated on a platform (e.g., a cloud platform).

It should be understood that the terms "system" and "network" may be used interchangeably in the present application. In addition, the terminology used in the present application is for the purpose of describing particular embodiments only and is not intended to be limiting of the present application. The terms "first," "second," "third," and "fourth," etc., in the description, claims, and the accompanying drawings of the present application are used to distinguish between different objects and not to describe a specific order. Furthermore, the terms "including" and "having," and any variations thereof, are intended to cover a non-exclusive inclusion.

In the embodiments of the present application, the term "indicate" may refer to a direct indication, an indirect indication, or represent that there is an associative relationship. For example, A indicating B may mean that A directly indicates B, e.g., B may be obtained through A; A indicating B may also mean that A indirectly indicates B, e.g., A indicates C, and B may be obtained through C; or A indicating B may also mean that there is an associative relationship between A and B.

In the embodiments of the present application, "B corresponding to A" indicates that B is associated with A, and B may be determined based on A. However, it should also be understood that determining B based on A does not imply that B is determined solely based on A, B may also be determined based on A and/or other information.

In the embodiments of the present application, the term "correspond" may indicate a relationship of direct or indirect correspondence between two, or a relationship of association between the two, or a relationship of indicating and being indicated, or a relationship of configuring and being configured, or the like.

In the embodiments of the present application, "predefined" or "preconfigured" may be implemented by pre-saving corresponding codes, tables, or other manners that may be used to indicate related information in a device (e.g., including a terminal device and a network device), and the present application does not limit its the specific implementation. For example, the term "predefined" may refer to what is defined in a protocol.

In the embodiments of the present application, the "protocol" may refer to standard protocols in the field of communications, which may include, for example, an LTE protocol, an NR protocol, and related protocols applied in future communication systems, which is not limited in the present application.

In the embodiments of the present application, the term "and/or" is merely to describe an associative relationship between associated objects, indicating that there are three relationships. For example, "A and/or B" may represent that there are three situations: A alone, both A and B, or B alone. In addition, the character "/" herein generally indicates that related objects before and after this character are in an "or" relationship.

In the embodiments of the present application, "comprise" may refer to a direct inclusion or an indirect inclusion. Optionally, "comprise" as mentioned in the embodiments of the present application may be replaced with "indicate" or "for determining." For example, "A comprises B" may be replaced with "A indicates B" or "A is for determining B."

In the various embodiments of the present application, the magnitude of the serial number of each of the above processes does not mean the order of execution. The order of execution of each process should be determined by its function and internal logic, and should not constitute any limitation on the implementation process of the embodiments of the present application.

In the several embodiments provided in the present application, it should be understood that the disclosed systems, apparatuses, and methods may be implemented in other manners. For example, the apparatus embodiments described above are merely illustrative. For example, the division of units is only a logical functional division, and there may be other ways of division in actual implementation. For example, multiple units or components may be combined or integrated into another system, or some features may be ignored or not executed. In another aspect, the coupling or direct coupling or communication connection illustrated or discussed may be an indirect coupling or communication connection via some interfaces, devices, or units, which may be in electrical, mechanical, or other forms.

The units described as separate components may or may not be physically separate, and the components displayed as units may or may not be physical units, that is, they may be located in one place, or may be distributed over multiple network units. Some or all of the units may be selected according to actual requirements to achieve the objectives of the solutions of the embodiments.

In addition, various functional units in the various embodiments of the present application may be integrated into one processing unit, or each unit may exist physically alone, or two or more units may be integrated into one unit.

In the above embodiments, all or part of the implementation may be implemented via software, hardware, firmware, or any combination thereof. When implemented via software, all or part of the implementation may be implemented in the form of a computer program product. The computer program product includes one or more computer instructions. When the computer program instructions are loaded and executed on a computer, the processes or functions described in the embodiments of the present application are generated in whole or in part. The computer may be a general-purpose computer, a special-purpose computer, a computer network, or other programmable apparatus. The computer instructions may be stored in a computer-readable storage medium or transmitted from one computer-readable storage medium to another computer-readable storage medium. For example, the computer instructions may be transmitted from a website, a computer, a server, or a data center to another website, computer, server, or data center via a wired manner (e.g., coaxial cable, optical fiber, digital subscriber line (DSL)) or a wireless manner (e.g., infrared, radio, microwave, etc.). The computer-readable storage medium may be any available medium that may be accessed by a computer or a data storage device such as a server or data center that integrates one or more available medium. The available medium may be a magnetic medium (e.g., a floppy disk, hard disk, or magnetic tape), an optical medium (e.g., a digital video disc (DVD)), or a semiconductor medium (e.g., a solid state disk (SSD)).

The above descriptions are only specific embodiments of the present application, but the protection scope of the present application is not limited thereto. Any change or substitution that is readily conceivable to a person skilled in the art within the technical scope disclosed in the present application shall fall within the protection scope of the present application. Therefore, the protection scope of the present application shall be subject to the protection scope of the claims.

## Claims

1. A wireless communication method, comprising:
receiving, by a terminal device, first signaling from a first master node (MN) or a first secondary node (SN), wherein the first signaling is used to indicate the terminal device to perform a layer 1/layer 2 triggered mobility (LTM) switch to a target cell,
wherein the target cell is determined based on a plurality of candidate cells, and the plurality of candidate cells belong to different SNs.

2. The method according to claim 1, wherein the first signaling comprises at least one of:
an identity of the target cell;
transmission configuration indicator (TCI) state information of the target cell;
time advance (TA) information of the target cell;
a random access channel (RACH) resource configuration for the terminal device;
an uplink resource configuration for the terminal device; or
an uplink (UL)/supplementary uplink (SUL) carrier configuration for the terminal device.

3. The method according to claim 1 or 2, wherein the first signaling further comprises first switch indication information, and the first switch indication information is used to indicate whether the LTM switch is a master cell group (MCG) LTM switch or a secondary cell group (SCG) LTM switch.

4. The method according to claim 2 or 3, wherein the RACH resource configuration for the terminal device comprises a contention free random access (CFRA) resource configuration selected for the target cell, and the CFRA resource configuration is determined based on an indication from a target SN or a source SN.

5. The method according to any one of claims 1 to 4, wherein before receiving, by the terminal device, the first signaling, the method further comprises:
reporting, by the terminal device, measurement results of the plurality of candidate cells to the first MN or the first SN, wherein the measurement results are used by the first MN or the first SN to determine the target cell and/or content of the first signaling.

6. The method according to claim 5, wherein
in a case where the measurement results are reported to the first MN, reporting resources for the measurement results are configured by the first MN; and
in a case where the measurement results are reported to the first SN, reporting resources for the measurement results are configured by the first SN.

7. The method according to claim 6, wherein
in a case where the measurement results are reported to the first MN, the target cell is determined by the first MN; and
in a case where the measurement results are reported to the first SN, the target cell is determined by the first SN.

8. The method according to any one of claims 5 to 7, wherein before reporting, by the terminal device, the measurement results of the plurality of candidate cells to the first MN or the first SN, the method further comprises:
receiving, by the terminal device, first LTM configuration information from the first MN or the first SN, wherein the first LTM configuration information is used by the terminal device to perform measurements on the plurality of candidate cells, and the first LTM configuration information is determined based on configuration preparation of the first MN and/or configuration preparation of the first SN.

9. The method according to claim 8, wherein the first LTM configuration information comprises at least one of:
configuration information for the plurality of candidate cells;
configuration information for the measurements;
reporting configuration information for the measurements;
early synchronization configuration information for the plurality of candidate cells; or
TCI state configuration information for the plurality of candidate cells.

10. The method according to any one of claims 1 to 9, further comprising:
in a case where the terminal device completes the LTM switch, transmitting, by the terminal device, a first reconfiguration complete message to a target SN or the first MN.

11. The method according to claim 10, wherein the first reconfiguration complete message does not comprise a target cell identity (ID).

12. A wireless communication method, comprising:
transmitting, by a first device, first signaling to a terminal device, wherein the first signaling is used to indicate the terminal device to perform a layer 1/layer 2 triggered mobility (LTM) switch to a target cell,
wherein the target cell is determined based on a plurality of candidate cells, and the plurality of candidate cells belong to different secondary nodes (SNs).

13. The method according to claim 12, wherein the first signaling comprises at least one of:
an identity of the target cell;
transmission configuration indicator (TCI) state information of the target cell;
time advance (TA) information of the target cell;
a random access channel (RACH) resource configuration for the terminal device;
an uplink resource configuration for the terminal device; or
an uplink (UL)/supplementary uplink (SUL) carrier configuration for the terminal device.

14. The method according to claim 12 or 13, wherein the first signaling further comprises first switch indication information, and the first switch indication information is used to indicate whether the LTM switch is a master cell group (MCG) LTM switch or a secondary cell group (SCG) LTM switch.

15. The method according to any one of claims 12 to 14, wherein the RACH resource configuration for the terminal device comprises a contention free random access (CFRA) resource configuration selected for the target cell, and the CFRA resource configuration is determined based on an indication from a target SN or a source SN.

16. The method according to any one of claims 12 to 15, wherein the target cell is determined based on measurement results of the plurality of candidate cells from the terminal device.

17. The method according to any one of claims 12 to 16, wherein the target cell is determined by the first device.

18. The method according to any one of claims 12 to 17, wherein before transmitting, by the first device, the first signaling to the terminal device, the method further comprises:
receiving, by the first device, measurement results of the plurality of candidate cells reported by the terminal device.

19. The method according to claim 18, wherein reporting resources for the measurement results are configured by the first device.

20. The method according to any one of claims 17 to 19, further comprising:
transmitting, by the first device, indication information of the target cell to a second device.

21. The method according to any one of claims 12 to 16, wherein the target cell is determined by a second device.

22. The method according to claim 21, wherein before transmitting, by the first device, the first signaling to the terminal device, the method further comprises:
receiving, by the first device, first indication information from the second device, wherein the first indication information is used to indicate the target cell.

23. The method according to any one of claims 12 to 22, further comprising:
indicating, by the first device, TCI state information of the target cell to a target SN.

24. The method according to any one of claims 12 to 23, wherein before transmitting, by the first device, the first signaling to the terminal device, the method further comprises:
transmitting, by the first device, first LTM configuration information to the terminal device, wherein the first LTM configuration information is used by the terminal device to perform measurements on the plurality of candidate cells, and the first LTM configuration information is determined based on configuration preparation of the first device.

25. The method according to claim 24, wherein the first LTM configuration information comprises at least one of:
configuration information for the plurality of candidate cells;
configuration information for the measurements;
reporting configuration information for the measurements;
early synchronization configuration information for the plurality of candidate cells; or
TCI state configuration information for the plurality of candidate cells.

26. The method according to any one of claims 12 to 25, wherein the first device is a first SN or a first master node (MN).

27. The method according to any one of claims 12 to 25, further comprising:
transmitting, by the first device, second indication information to a target SN, wherein the second indication information is used to indicate that the terminal device is performing the LTM switch to the target cell.

28. The method according to claim 27, wherein the first device is a first MN.

29. A communication device, wherein the communication device is a terminal device, and the communication device comprises:
a receiving module, configured to receive first signaling from a first master node (MN) or a first secondary node (SN), wherein the first signaling is used to indicate the terminal device to perform a layer 1/layer 2 triggered mobility (LTM) switch to a target cell,
wherein the target cell is determined based on a plurality of candidate cells, and the plurality of candidate cells belong to different SNs.

30. The communication device according to claim 29, wherein the first signaling comprises at least one of:
an identity of the target cell;
transmission configuration indicator (TCI) state information of the target cell;
time advance (TA) information of the target cell;
a random access channel (RACH) resource configuration for the terminal device;
an uplink resource configuration for the terminal device; or
an uplink (UL)/supplementary uplink (SUL) carrier configuration for the terminal device.

31. The communication device according to claim 29 or 30, wherein the first signaling further comprises first switch indication information, and the first switch indication information is used to indicate whether the LTM switch is a master cell group (MCG) LTM switch or a secondary cell group (SCG) LTM switch.

32. The communication device according to claim 30 or 31, wherein the RACH resource configuration for the terminal device comprises a contention free random access (CFRA) resource configuration selected for the target cell, and the CFRA resource configuration is determined based on an indication from a target SN or a source SN.

33. The communication device according to any one of claims 29 to 32, wherein the communication device further comprises:
a first transmitting module, configured to: before the receiving module receives the first signaling, report measurement results of the plurality of candidate cells to the first MN or the first SN, wherein the measurement results are used by the first MN or the first SN to determine the target cell and/or content of the first signaling.

34. The communication device according to claim 33, wherein
in a case where the measurement results are reported to the first MN, reporting resources for the measurement results are configured by the first MN; and
in a case where the measurement results are reported to the first SN, reporting resources for the measurement results are configured by the first SN.

35. The communication device according to claim 34, wherein
in a case where the measurement results are reported to the first MN, the target cell is determined by the first MN; and
in a case where the measurement results are reported to the first SN, the target cell is determined by the first SN.

36. The communication device according to any one of claims 33 to 35, wherein the receiving module is further configured to:
before the first transmitting module reports the measurement results of the plurality of candidate cells to the first MN or the first SN, receive first LTM configuration information from the first MN or the first SN, wherein the first LTM configuration information is used by the terminal device to perform measurements on the plurality of candidate cells, and the first LTM configuration information is determined based on configuration preparation of the first MN and/or configuration preparation of the first SN.

37. The communication device according to claim 36, wherein the first LTM configuration information comprises at least one of:
configuration information for the plurality of candidate cells;
configuration information for the measurements;
reporting configuration information for the measurements;
early synchronization configuration information for the plurality of candidate cells; or
TCI state configuration information for the plurality of candidate cells.

38. The communication device according to any one of claims 29 to 37, wherein the communication device further comprises:
a second transmitting module, configured to: in a case where the terminal device completes the LTM switch, transmit a first reconfiguration complete message to a target SN or the first MN.

39. The communication device according to claim 38, wherein the first reconfiguration complete message does not comprise a target cell identity (ID).

40. A communication device, wherein the communication device is a first device, and the communication device comprises:
a transmitting module, configured to transmit first signaling to a terminal device, wherein the first signaling is used to indicate the terminal device to perform a layer 1/layer 2 triggered mobility (LTM) switch to a target cell,
wherein the target cell is determined based on a plurality of candidate cells, and the plurality of candidate cells belong to different secondary nodes (SNs).

41. The communication device according to claim 40, wherein the first signaling comprises at least one of:
an identity of the target cell;
transmission configuration indicator (TCI) state information of the target cell;
time advance (TA) information of the target cell;
a random access channel (RACH) resource configuration for the terminal device;
an uplink resource configuration for the terminal device; or
an uplink (UL)/supplementary uplink (SUL) carrier configuration for the terminal device.

42. The communication device according to claim 40 or 41, wherein the first signaling further comprises first switch indication information, and the first switch indication information is used to indicate whether the LTM switch is a master cell group (MCG) LTM switch or a secondary cell group (SCG) LTM switch.

43. The communication device according to any one of claims 40 to 42, wherein the RACH resource configuration for the terminal device comprises a contention free random access (CFRA) resource configuration selected for the target cell, and the CFRA resource configuration is determined based on an indication from a target SN or a source SN.

44. The communication device according to any one of claims 40 to 43, wherein the target cell is determined based on measurement results of the plurality of candidate cells from the terminal device.

45. The communication device according to any one of claims 40 to 44, wherein the target cell is determined by the first device.

46. The communication device according to any one of claims 40 to 45, wherein the communication device further comprises:
a first receiving module, configured to: before the transmitting module transmits the first signaling to the terminal device, receive measurement results of the plurality of candidate cells reported by the terminal device.

47. The communication device according to claim 46, wherein reporting resources for the measurement results are configured by the first device.

48. The communication device according to any one of claims 45 to 47, wherein the transmitting module is further configured to:
transmit indication information of the target cell to a second device.

49. The communication device according to any one of claims 40 to 44, wherein the target cell is determined by a second device.

50. The communication device according to claim 49, wherein the communication device further comprises:
a second receiving module, configured to: before the transmitting module transmits the first signaling to the terminal device, receive first indication information from the second device, wherein the first indication information is used to indicate the target cell.

51. The communication device according to any one of claims 40 to 50, wherein the transmitting module is further configured to:
indicate TCI state information of the target cell to a target SN.

52. The communication device according to any one of claims 40 to 51, wherein the transmitting module is further configured to:
before transmitting the first signaling to the terminal device, transmit first LTM configuration information to the terminal device, wherein the first LTM configuration information is used by the terminal device to perform measurements on the plurality of candidate cells, and the first LTM configuration information is determined based on configuration preparation of the first device.

53. The communication device according to claim 52, wherein the first LTM configuration information comprises at least one of:
configuration information for the plurality of candidate cells;
configuration information for the measurements;
reporting configuration information for the measurements;
early synchronization configuration information for the plurality of candidate cells; or
TCI state configuration information for the plurality of candidate cells.

54. The communication device according to any one of claims 40 to 53, wherein the first device is a first SN or a first master node (MN).

55. The communication device according to any one of claims 40 to 53, wherein the transmitting module is further configured to:
transmit second indication information to a target SN, wherein the second indication information is used to indicate that the terminal device is performing the LTM switch to the target cell.

56. The communication device according to claim 55, wherein the first device is a first MN.

57. A communication device, comprising a transceiver, a memory, and a processor, wherein the memory is configured to store a program, and the processor is configured to invoke the program in the memory and control the transceiver to receive or transmit signals, to enable the communication to perform the method according to any one of claims 1 to 11.

58. A communication device, comprising a transceiver, a memory, and a processor, wherein the memory is configured to store a program, and the processor is configured to invoke the program in the memory and control the transceiver to receive or transmit signals, to enable the communication device to perform the method according to any one of claims 12 to 28.

59. An apparatus, comprising a processor, configured to invoke a program from a memory, to enable the apparatus to perform the method according to any one of claims 1 to 11 or any one of claims 12 to 28.

60. A chip, comprising a processor, configured to invoke a program from a memory, to enable a device equipped with the chip to perform the method according to any one of claims 1 to 11 or any one of claims 12 to 28.

61. A computer-readable storage medium, having a program stored thereon, wherein the program enables a computer to perform the method according to any one of claims 1 to 11 or any one of claims 12 to 28.

62. A computer program product, comprising a program, wherein the program enables a computer to perform the method according to any one of claims 1 to 11 or any one of claims 12 to 28.

63. A computer program, wherein the computer program enables a computer to perform the method according to any one of claims 1 to 11 or any one of claims 12 to 28.
